# EUROPEAN PATENT APPLICATION

(11) **EP 4 661 375 A1**
(43) Date of publication of application: **10.12.2025**
(21) Application number: 25164645.1
(22) Date of filing: 19.03.2025
(51) Int. Cl.: H04L 67/12, H04W 4/40, H04W 4/70, A01B 76/00

(54) **SYSTEM AND METHOD OF NETWORKING FOR MOBILE MACHINES**

(30) Priority: 07.06.2024 GB 202408164
(71) Applicant: AGCO International GmbH, 8212 Neuhausen am Rheinfall (CH)
(72) Inventor: Geiger, Edith, 87616 Marktoberdorf (DE); Behrndt, Max, 87616 Marktoberdorf (DE); Fries, Pascal, 87616 Marktoberdorf (DE); Fünfer, Joachim, 87616 Marktoberdorf (DE); Göttlicher, Michael, 87616 Marktoberdorf (DE); Stoffels, Fabian, 87616 Marktoberdorf (DE)
(74) Representative: AGCO Intellectual Property Department

(57) **Abstract**

Each of a plurality of mobile machines includes an onboard communications and control system configured to communicate with each of the other machines via at least two different electronic communication methods, communicate working information specific to the machine to each of the other machines, receive working information from the other machines and store the received working information in the data pool. An offboard computing system is configured to communicate with each of the mobile machines using at least one of the at least two different electronic communication methods, receive the working information from each of the machines, store the received working information in a data pool and communicate the data pool to each of the machines. Each of the data pools always includes the most recent working information from each of the mobile machines. The mobile machines may use the data pools to coordinate operations.

## Description

### FIELD

Embodiments of the present invention relate to a system and method for networking a group of mobile machines. More particularly, embodiments of the present invention relate to a system and method for networking the group of mobile machines using a resilient communications structure and decentralized data storage and management.

### BACKGROUND

In agricultural and construction operations it is common for multiple mobile machines to coordinate efforts to complete tasks. In the construction industry bulldozers and earthmovers may coordinate operations to prepare the ground of a construction site. In the agriculture industry harvesters and tractors may coordinate operations to harvest a crop and transport the crop to a truck or storage facility. To coordinate tasks it is desirable for the machines or the machine operators to communicate with one another to share working information such as machine location. The environment in which the machines operate can present challenges for communications. The machines operate outdoors in large fields, for example, that may present obstacles such as trees, hills and buildings. Furthermore, the machines may operate in adverse environmental conditions including dust, rain and snow. Additionally, the environment the machines operate in may be large such that the distance between machines may exceed the range of communications even within the same field. These challenges can make it difficult to establish and maintain electronic communications between machines needed to share working information for machine coordination.

The above section provides background information related to the present disclosure which is not necessarily prior art.

### SUMMARY

A system according to a first embodiment of the invention comprises a plurality of mobile machines each including an onboard communications and control system. Each onboard communications and control system is configured to communicate with each of the other machines of the plurality of mobile machines via at least two different electronic communication methods, a first of the at least two different electronic communication methods including communications through a machine-to-machine network, and a second of the at least two different electronic communication methods including communications through an external network.

Each onboard communications and control system is further configured to collect working information specific to the machine and store the working information in a data pool on the machine, communicate the working information specific to the machine to each of the other machines using any of the at least two different electronic communication methods, and receive working information from the other machines using any of the at least two different electronic communications methods and store the received working information in the data pool.

The system further comprises an offboard computing system configured to communicate with each of the mobile machines using at least one of the at least two different electronic communication methods, receive the working information from each of the machines, store the received working information in a data pool, and communicate the data pool to each of the machines. Each of the onboard communications and control systems on the mobile machines communicates the working information specific to the machine to the other mobile machines and to the offboard computing system when the working information specific to the respective machine is collected by the onboard computing system such that each data pool stored on the mobile machines and the data pool maintained by the offboard computing system always include the most recent working information from each of the mobile machines.

In some embodiments of the invention, each of the on-board communications and control systems being configured to use the working information to coordinate operation of the mobile machine with the other of the plurality of mobile machines in performing a task.

In some embodiments of the invention, the working information may include a portion of a task completed by the machine, machine setting information and/or machine environment information.

In some embodiments of the invention the onboard communications and control system of each of the plurality of mobile machines is configured to determine if one of the at least two different electronic communication methods is unavailable and, if so, use another of the at least two different electronic communication methods to communicate with the other machines. In some embodiments, the onboard communications and control systems are configured to communicate the working information and to receive working information over two or more of the at least two different electronic communication methods simultaneously. In some embodiments, the on-board communications and control system of each of the plurality of mobile machines is configured to communicate a first portion of the working information over a first of the at least two different electronic communications methods and a second portion of the working information over a second of the at least two different electronic communications methods.

In some embodiments, the first of the at least two different electronic communication methods uses a wireless network protocol based on the IEEE 802.11 family of local area network standards, and the external communications network including a cellular communications network and/or a satellite communications network.

In some embodiments the offboard computing system includes a cloud computing system configured to communicate with each of the mobile machines using any of the at least two different electronic communication methods; in some embodiments the offboard computing system includes a personal computing device configured to communicate with each of the mobile machines using any of the at least two different electronic communication methods; in some embodiments the offboard computing system includes a personal computing device configured to communicate with each of the mobile machines using only one of the at least two different electronic communication methods.

A method according to another embodiment of the invention comprises using an onboard communications and control system of each of a plurality of mobile agricultural machines to communicate with each of the other machines of the plurality of mobile agricultural machines via at least two different electronic communication methods, a first of the at least two different electronic communication methods including communications through a machine-to-machine network, and a second of the at least two different electronic communication methods including communications through an external network, collect working information specific to the machine and store the working information in a data pool on the machine, communicate the working information specific to the machine to each of the other machines using any of the at least two different electronic communication methods, and receive working information from the other machines using any of the at least two different electronic communications methods and store the received working information in the data pool.

The method further comprises using an offboard computing system to communicate with each of the mobile agricultural machines using at least one of the at least two different electronic communication methods, receive the working information from each of the machines, store the received working information in a data pool, and communicate the data pool to each of the machines. Each of the onboard communications and control systems on the mobile agricultural machines communicates the working information specific to the machine to the other mobile agricultural machines and to the offboard computing system when the working information specific to the respective machine is collected by the onboard computing system such that each data pool stored on the mobile agricultural machines and the data pool maintained by the offboard computing system always include the most recent working information from each of the mobile agricultural machines.

This summary is provided to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### DRAWINGS

Embodiments of the present invention are described in detail below with reference to the attached drawing figures, wherein:
Fig. 1 is a diagram of a system constructed in accordance with an embodiment of the invention.
Fig. 2 is a diagram of an exemplary communications and control system implemented by various machines of the system of FIG. 1.
Fig. 3 is a diagram illustrating communications between machines of the system of FIG. 1.
Fig. 4 is a flow diagram depicting certain steps in a method of adding machines to the system of FIG. 1.
Fig. 5 is a diagram of a system constructed in accordance with another embodiment of the invention.
Fig. 6 is a diagram of a system constructed in accordance with another embodiment of the invention.
Fig. 7 illustrates a first scenario implementing principles of the present invention.
Fig. 8 illustrates a second scenario implementing principles of the present invention.

The drawing figures do not limit the present invention to the specific embodiments disclosed and described herein. The drawings are not necessarily to scale, emphasis instead being placed upon clearly illustrating the principles of the invention.

### DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the spirit and scope of the invention as defined by the claims. The following description is, therefore, not to be taken in a limiting sense. Further, it will be appreciated that the claims are not necessarily limited to the particular embodiments set out in this description.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

When elements or components are referred to herein as being "connected" or "coupled," the elements or components may be directly connected or coupled together or one or more intervening elements or components may also be present. In contrast, when elements or components are referred to as being "directly connected" or "directly coupled," there are no intervening elements or components present.

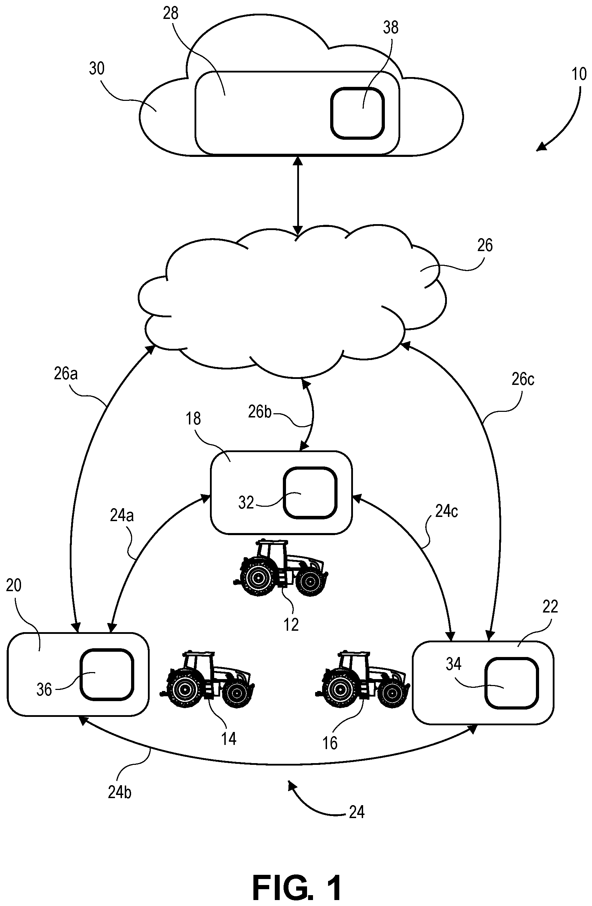

Turning now to the drawing figures and initially FIG. 1, a system 10 for networking mobile machines in accordance with embodiments of the invention is illustrated. The system 10 includes a plurality of mobile machines 12, 14, 16 each with an onboard communications and control system 18, 20, 22 configured to communicate with each of the other machines 12, 14, 16 via at least two different electronic communication methods. A first of the at least two different electronic communication methods includes communications through a machine-to-machine network 24 comprising communication links 24a, 24b and 24c. A second of the at least two different electronic communication methods includes communications through an external network 26 via communication links 26a, 26b and 26c. While each of the machines 12, 14, 16 is configured to communicate with each of the other machines via at least two different electronic communications methods, each machine can communicate using just one of the methods if necessary, as explained below. This feature provides redundancy in the event one of the methods is not available.

The system 10 also includes an offboard computing system 28 configured to communicate with each of the mobile machines 12, 14, 16 through at least one of the two different electronic communication methods. In the embodiment illustrated in FIG. 1 the offboard computing system 28 is part of a cloud computing system 30. Each of the onboard communications and control systems 18, 20, 22 and the offboard computing system 28 maintains a data pool 32, 34, 36, 38. Each data pool includes working information from all of the mobile machines 12, 14, 16. The working information is collected by the onboard communications and control systems 18, 20, 22 and shared among the machines 12, 14, 16 and with the offboard computing system 28 such that each data pool always includes the most recent working information from each of the mobile machines 12, 14, 16. Each of the machines 12, 14, 16 may use the data pool, for example, to coordinate operations between the machines 12, 14, 16 or to optimize performance.

As used herein, a mobile machine is a machine used to perform agricultural or construction tasks. A mobile machine includes a primary power source such as an internal combustion engine or battery and electric motor combination; ground engaging elements such as wheels or tracks that support the machine on a ground surface and propel the machine along the ground surface as driven by the power source; and one or more work systems for performing work tasks. A work system may include a permanently attached implement, such as a bulldozer blade, an attachment mechanism such as a drawbar or two- or three-point linkage, and/or a power transfer system such as a hydraulic system or a mechanical power take-off. A group of mobile machines within a system 10 forms a work group. Thus, in the embodiment illustrated in FIG. 1 machines 12, 14, 16 form a work group.

Examples of mobile machines include machines used primarily in the agricultural industry such as tractors, harvesters, sprayers and fertilizer spreaders, and machines used primarily in the construction industry such as bulldozers, earthmovers and graders. In the examples illustrated herein the mobile machines 12, 14, 16 are tractors. It will be understood, though, that other mobile machines may be used.

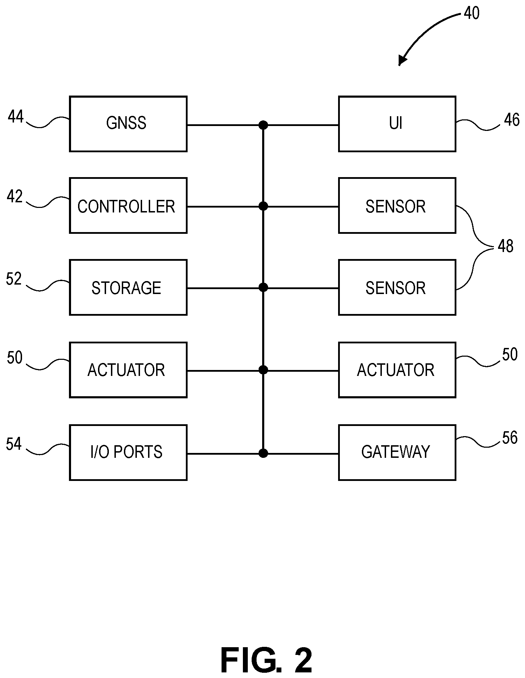

A diagram depicting various components of an exemplary onboard communications and control system 40 is illustrated in FIG. 2. The system 40 broadly includes a controller 42, a position determining device 44, a user interface 46, a plurality of sensors 48, a plurality of actuators 50, one or more storage components 52, one or more input/out ports 54 and a communications gateway 56. The system 40 is built into a mobile machine such that the various components of the system described and discussed herein are part of the machine's design and intended to remain permanently on the machine. While each of the onboard communications and control systems 18, 20, 22 is depicted separately from the respective mobile machine 12, 14, 16 in FIG. 1 for illustrative purposes, it will be appreciated that each of the onboard systems 18, 20, 22 is built into, and forms part of, its respective machine. Furthermore, it will be appreciated that the system 40 is exemplary in nature and that some of the mobile machines of the system 10 may include only a portion of the components of the communications and control system 40 as illustrated in FIG. 2.

The position determining device 44 includes a global navigation satellite system (GNSS) receiver, such as a device configured to receive signals from one or more positioning systems such as the United States' Global Positioning System (GPS), the European GALILEO system, the Chinese BeiDou system and/or the Russian GLONASS system, and to determine a location of the machine using the received signals. Alternatively or additionally, the positioning device 38 may use light detection and ranging (LiDAR) technology, radio detecting and ranging (RADAR) technology, one or more cameras, an inertial measurement device or a combination thereof to determine position.

The user interface 46 includes components for receiving information, instructions or other input from a user and may include buttons, switches, dials, and microphones, as well as components for presenting information or data to users, such as displays, light-emitting diodes, audio speakers and so forth. The user interface 46 may include one or more touchscreen displays capable of presenting visual representations of information or data and receiving instructions or input from the user via a single display surface.

The sensors 48 may be associated with any of various components or systems of the host machine including, for example, various elements of the engine, transmission(s), and hydraulic and electrical systems. One or more of the sensors 48 may be configured and placed to detect environmental or ambient conditions in, around or near the host machine. Such environmental or ambient conditions may include temperature, humidity, wind speed and wind direction. The actuators 50 are configured and placed to drive certain functions of the host machine. The actuators 50 may take virtually any form but are generally configured to receive control signals or instructions from the controller 42 (or other component of the system 40) and to generate a mechanical movement or action in response to the control signals or instructions. By way of example, the sensors 48 and actuators 50 may be used in automated steering of the host machine wherein the sensors 48 detect a current position or state of steered wheels and the actuators 50 drive steering action of the wheels. In another example, the sensors 48 collect work information data relating to the operation of the host machine and store the data in the storage component 52 as part of a data pool, communicate the data to a remote computing device via the communications gateway 56, communicate the data directly to another machine via the communications gateway 56, or a combination thereof.

The controller 42 is a computing device or computing system and includes one or more integrated circuits programmed or configured to implement the functions described herein and associated with the host machine. By way of example the controller 42 may be a digital controller and may include one or more general purpose microprocessors or microcontrollers, programmable logic devices, application specific integrated circuits or other computing devices. The controller 42 may include multiple computing components, such as electronic control units, placed in various different locations on the host machine, and may include one or more computing devices connected to the system 40 through the I/O ports 54. The controller 42 may also include one or more discrete and/or analog circuit components operating in conjunction with the one or more integrated circuits or computing components. Furthermore, the controller 42 may include or have access to one or more memory elements operable to store executable instructions, data, or both. The storage component 52 stores data and preferably includes a non-volatile storage medium such as solid state, optic or magnetic technology.

The communications gateway 56 includes one or more wireless transceivers configured to communicate with external machines or devices using wireless communications technology. The communications gateway 56 may include one or more wireless transceivers configured to communicate according to one or more wireless communications protocols or standards, such as one or more protocols based on the IEEE 802.11 family of standards ("Wi-Fi"), the Bluetooth wireless communications standard, a 433 MHz wireless communications protocol or a protocol for communicating over a cellular telephone network. Alternatively or additionally, the communications gateway 56 may include one or more wireless transceivers configured to communicate according to one or more proprietary or non-standardized wireless communication technologies or protocols, such as proprietary wireless communications protocols using 2.4 GHz or 5 GHz radio signals. Thus, the communications gateway 56 enables wireless communications with other machines such as other harvesters or tractors, with external devices such as laptop or tablet computers or smartphones, and with external communications networks such as a cellular telephone network, a satellite communications network or Wi-Fi network.

It will be appreciated that, for simplicity, certain elements and components of the system 40 have been omitted from the present discussion and from the diagram illustrated in FIG. 2. A power source or power connector is also associated with the system 40, for example, but is conventional in nature and, therefore, is not discussed herein.

As explained above, the system 40 is an onboard system meaning that the various components of the system 40 are part of the machine's design, are built into the machine and are intended to remain permanently on the machine. It will be appreciated though, that the system may be augmented with external devices or components such as sensors or actuators associated with an implement attached to the host machine and with which the system 40 communicates through a wired or wireless connection.

The system 10 illustrated in FIG. 1 includes a plurality of mobile agricultural machines 12, 14, 16 each including an onboard communications and control system 18, 20, 22 as described above. Each onboard communications and control system 18, 20, 22 is configured to communicate with each of the other machines of the plurality of mobile agricultural machines via at least two different electronic communication methods. A first of the at least two different electronic communication methods includes communications through the machine-to-machine network 24, and a second of the at least two different electronic communication methods includes communications through the external network 26.

The machine-to-machine network 24 allows the machines 12, 14, 16 to communicate directly with each other using, for example, the communications gateway 56 on each machine to transmit signals to, and receive signals from, the communications gateway 56 on each of the other machines. In the embodiment illustrated in FIG. 1, the machine-to-machine network 24 uses a wireless network protocol based on the IEEE 802.11 family of local area network standards commonly referred to as "Wi-Fi".

The external network 26 allows the machines 12, 14, 16 to communicate with each other through nodes on the external network 26 using, for example, the communications gateway 56 on each machine to transmit signals to, and receive signals from, a communications node of the external network 26. The external network also allows the machines 12, 14, 16 to communicate with offboard computing systems, including cloud computing systems, not associated specifically with any of the machines 12, 14, 16. In the embodiment illustrated in FIG. 1, the external network is a cellular telephone communications network. In other embodiments the external network is a satellite communications network.

The onboard communications and control system 18, 20, 22 of each of the machines 12, 14, 16 is configured to communicate with each of the other machines via both the machine-to-machine network 24 and the external network 26 and may use either network, or both simultaneously, depending on the situation. If one of the mobile machines is unable to communicate with the other mobile machines via either one of the two methods it can still communicate with the other machines via the other of the two methods. This addresses the problem of disrupted communications between the machines 12, 14, 16 by providing redundant communications channels. If one of the machines 12, 14, 16 is unable to communicate with the other machines 12, 14, 16 via the machine-to-machine network 24 because, for example, it is out of range, it may still communication with the other machines via the external network 26. Similarly, if one of the machines is unable to communicate with the other machines via the external network 26 it may still communication with the other machines via the machine-to-machine network 24.

The system 10 functions as a mesh network, enabling each of the machines 12, 14, 16 to communicate with each of the other machines 12, 14, 16 either directly or indirectly. If the communication link 24c is disrupted, for example, such that machine 16 is not able to communicate directly with machine 12 via the machine-to-machine network 24, machine 16 can still communicate with machine 12 indirectly through the machine-to-machine network 24 by way of machine 14 and communication links 24a and 24b. Similarly, if the communication link 24c and the communication link 26c are both disrupted such that the machine 16 is unable to communicate via the external network 26 and is only able to communicate with machine 14 via communication link 24b, machine 16 can still communicate with the external network 26 by way of machine 14 through communication links 24b and 26a.

As mentioned above, each machine 12, 14, 16 may communicate with each of the other machines 12, 14, 16 via two communications methods simultaneously. When communicating data from a data pool, for example, from machine 12 to machine 14, it may be advantageous to communicate a first portion of the data via the machine-to-machine network 24 and a second portion of the data via the external network 26 to reduce the amount of time required to communicate all of the data. Furthermore, if a machine begins to communicate data from a data pool via one of the two communications methods and that method is disrupted, the machine may continue to communicate the data from the data pool via the other of the two communications methods.

Each onboard communications and control system 18, 20, 22 is configured to communicate with each of the other machines using the same communications protocol regardless of the electronic communication method. In the embodiment illustrated in FIG. 1, the communications protocol is based on the data distribution service (DDS) and internet protocol (IP).

The working information collected by the onboard communications and control system 18, 20, 22 includes information relating to work being performed by the machine, work completed by the machine, machine state information and/or machine environment information. The onboard communications and control system 18, 20, 22 collects the working information as data from the sensors 48, the position determining component 44 and other components of the communications and control system 18, 20, 22 and/or from an external source such as a machine operator, a weather station or from a remote source.

Work being performed by the machine and work completed by the machine includes the type of work being performed or completed and field coverage. The type of work being performed or completed may include tillage, application such as fertilizer, pesticide, herbicide or other product application, harvesting, and operations support roles. Operations support roles include grain carts or trucks that receive grain from a harvester and transport the grain to another vehicle or storage location, a nurse truck that provides an application product to a sprayer, a silage truck or wagon that receives silage from a forage harvester. Field coverage includes areas of a field the machine has tilled or harvested.

Machine state information includes machine setting information, machine location, orientation, speed, acceleration and direction of travel. Machine state information also includes information about the status of machine systems and components collected by the communications and control system including, without limitation, fuel level and other fluid levels, product or harvested crop fill level, fluid and component temperature, and wear status of components. Environmental information includes conditions external to the machine such as field boundaries, field size, soil state, soil conditions and weather conditions including past and present precipitation, ambient temperature and humidity.

These are but a few examples of working information and it will be understood that working information may include virtually any information that can be collected, received or stored by a mobile machine. The working information is stored in the data pool 32, 34, 36 on the machine 12, 14, 16. Each of the data pools 32, 34, 36 illustrated in FIG. 1 is stored locally on the respective machine in computer memory associated with the controller 42, in the storage component 52, or both. The data pool is a collection of computer-readable data that can be shared between the machines 12, 14, 16 and used by the machines 12, 14, 16 to, for example, coordinate work and optimize operations, as explained below.

Each communications and control system 18, 20, 22 is configured to communicate the working information specific to that machine to each of the other machines using any of the at least two different electronic communication methods. In the embodiment illustrated in FIG. 1, machine 12 can communicate its working information to each of the other machines 14 and 16 using Wi-Fi 24 or the cellular communications network 26. As explained below, each machine 12, 14, 16 communicates the working information upon collecting the working information such that each data pool 32, 34, 36 always includes the most recent working information from each of the machines 12, 14, 16. Each onboard communications and control system 18, 20, 22 is configured to communicate the working information specific to the machine to each of the other machines using any of the at least two different electronic communication methods, as explained above. Each machine may communicate the working information specific to the machine to each of the other machines by communicating the working information to a single system, such as the offboard computing system 28, which then communicates the working information from each mobile machine to all of the mobile machines in the system 10 in the form of an updated data pool. Alternatively, each machine may communicate the working information specific to the machine directly to each of the other machines in a peer-to-peer configuration rather than going through a single system.

The offboard computing system 28 is a computing system that is not built into a particular machine 12, 14, 16. In the embodiment illustrated in FIG. 1 the offboard computing system 28 is part of a cloud computing system 30 accessible through the external network 26. The offboard computing system 28 receives, stores and communicates a data pool 38 including the working information from each of the mobile machines 12, 14, 16. Each onboard communications and control system 18, 20, 22 communicates with the offboard computing system 28 using the same communications protocol and in the same manner as it communicates with the other onboard communications and control systems 18, 20, 22. In this way the offboard computing system 28 implements a virtual mobile machine that, from the perspective of the mobile machines 12, 14, 16 functions like another mobile machine. As explained above, the offboard computing system 28 receives updated working information from each of the machines 12, 14, 16, updates the data pool 38, and communicates the updated working information to all of the machines 12, 14, 16.

Each of the machines 12, 14, 16 is constantly collecting and otherwise updating the working information specific to it and communicating the working information to the other machines in the system 10 and to the offboard computing system 28. Thus, the data pools 32, 34, 36, 38 are updated in real time or in near real time, limited only by delays inherent in the communications mediums used. Such delays are typically a few seconds or less such that updated working information is reflected in each of the data pools within five seconds or less from the time the working information was generated on the machine. If one of the machines 12, 14, 16 temporarily loses communications with all of the other machines and with the offboard computing system 28 it will not be able to send or receive data pool updates until communications are reestablished with at least one other machine or with the offboard computing system 28. Reestablishing communications may take a few minutes or longer.

If one of the mobile machines is shut down or moves beyond the range of the one or more methods of communication it may temporarily lose contact with the rest of the system 10. When that happens the machine that lost contact with the rest of the system 10 communicates its most recent working information to the other mobile machines and receives the latest data pool upon reestablishing communications with at least one other entity of the system 10.

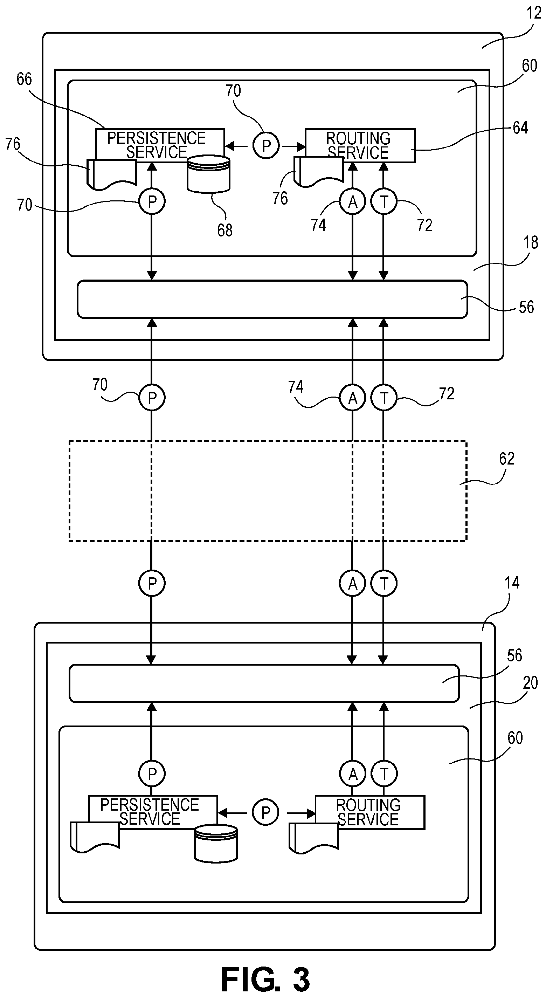

A diagram illustrating certain aspects of data exchange between mobile machines is illustrated in FIG. 3, including mobile machines 12, 14 with onboard communications and control systems 18, 20 and communications gateway 56. Each of the onboard communications and control systems 18, 20 runs an application 60 that is stored, for example, in storage 52 and/or memory and that is executed by the controller 42. The two mobile machines 12, 14 communicate via a communications medium 62 that includes the at least two different electronic communication methods as explained above. The various components of machine 12 and machine 14 illustrated in FIG. 3 are identical in function, therefore only those components associated with machine 12 will be discussed in detail with the understanding that the components of machine 14 perform identical functions.

The application 60 includes a routing service module 64 and a persistence service module 66 associated with a database 68. The routing service module 64 implements routing rules including rules for routing data to and between a persistent domain 70, a transient domain 72 and an announcement domain 74. The routing service module 64 routes data either directly to other work group members via the announcement domain 74 or transient domain 72 or to the persistence service module 66 where the data is stored in the database 68 and communicated to other work group members through the persistent domain 70. Persistent data remains valid and useful during the life of the work group and includes geographic data such as field boundaries and obstacles and task data such as work performed. Transient data is valid or useful only for a certain period of time, including data that changes frequently. Transient data includes machine location, speed, and orientation, machine sensor data and machine heartbeat signals used to track the strength of a machine's communication connection.

The persistence service module 66 manages persistent data by storing the persistent data in the onboard database 68 and synchronizing the contents of the database 68 with similar databases maintained by other work group members and with the offboard computing system 28 to ensure that each database always includes the most recent persistent data from each of the mobile machines 12, 14, 16. Each data pool 32, 34, 36, 38 includes both persistent data and transient data. The application 60 shares persistent data with the other machines by way of the persistence service module 66, as explained above, and shares transient data with the other machines through the transient domain 72. Because the persistent data is stored in the database 68 it is retained even after the machine 12 is shut down. The transient data may be stored in volatile memory, or not stored at all, and therefore is lost and will not be available after the machine 12 is shut down. When a new machine joins a work group it receives all of the persistent data stored in the databases of the other machines and begins receiving transient data from the other machines. Little or no historic transient data, however, is communicated to the new machine.

The announcement domain 74 is used to exchange data used to manage the work group including machine join requests, machine dismiss instructions and sharing information relating to work group members. Announcement data is transient and is not stored in the database 68. The application 60 maintains and uses a list 76 of work group members to determine which machines receive data via the persistent domain 70 and the transient domain 72. The application 60 adds machines to the work group and removes machines from the work group by adding them to or removing them from the list 76. The diagram in FIG. 3 illustrates data communications between two mobile machines 12 and 14, but it will be understood that the same communications protocols are used for data communications between any of the members 12, 14, 16, 28 of the system 10. For example, the offboard computing system 28 implements an application with the same or similar functionally as the application 60.

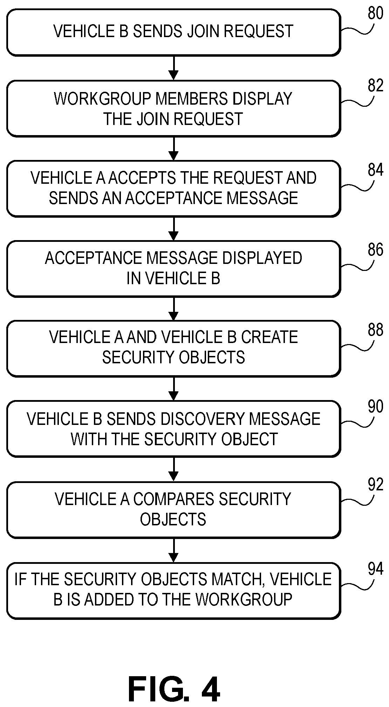

A method of adding a vehicle to a work group is illustrated by the flow diagram in FIG. 4. A new vehicle, vehicle B, seeks to join a work group that includes vehicle A. Vehicle B sends a join request on the announcement domain, as depicted in block 80. All vehicles already in the work group display the join request along with identifying information of vehicle B (such as a vehicle identification number), as depicted in block 82. At least one user must accept the request, as depicted in block 84, wherein the vehicle accepting the request, vehicle A, sends an acceptance message containing work group connection information to the requesting vehicle. The acceptance message is displayed in vehicle B, as depicted in block 86. Both vehicle A and vehicle B create or share a security object unique to vehicle B using vehicle information communicated to vehicle A from vehicle B on the announcement domain, as depicted in block 88. In some implementations security objects may be created or shared by entities external to the vehicles, such as where one or more security objects are created by the cloud computing system 30 or other offboard computing system.

The security object may include a hash wherein the first six bytes are calculated from the subject of the certificate of vehicle B. The subject includes information that is unique to the hardware and may have the structure VIN:ECU, where VIN is the vehicle identification number and ECU is identification information of an electronic control unit of vehicle B. The subject may further include country, state, location and/or organization information.

Vehicle B sends a discovery message in the announcement domain including the security object, as depicted in block 90. Vehicle A, which independently created the same security object as vehicle B as mentioned above, compares the security object it created with the security object received from vehicle B in the discovery message, as depicted in block 92. If the security objects are the same the process of adding vehicle B to the work group is completed and vehicle B is added to the list 76, as depicted in block 94. If the security objects are not the same the process of adding vehicle B to the work group is cancelled and vehicle B is ignored.

Any participant in a work group can remove any vehicle from the work group. If vehicle A wishes to remove vehicle C from the work group vehicle A removes vehicle C from its own whitelist. This action prevents vehicle C from receiving any messages from vehicle C. Vehicle A then publishes the new whitelist to other members of the work group. Alternatively, vehicle A may send a removal request to the offboard computing system which removes vehicle C from all whitelists.

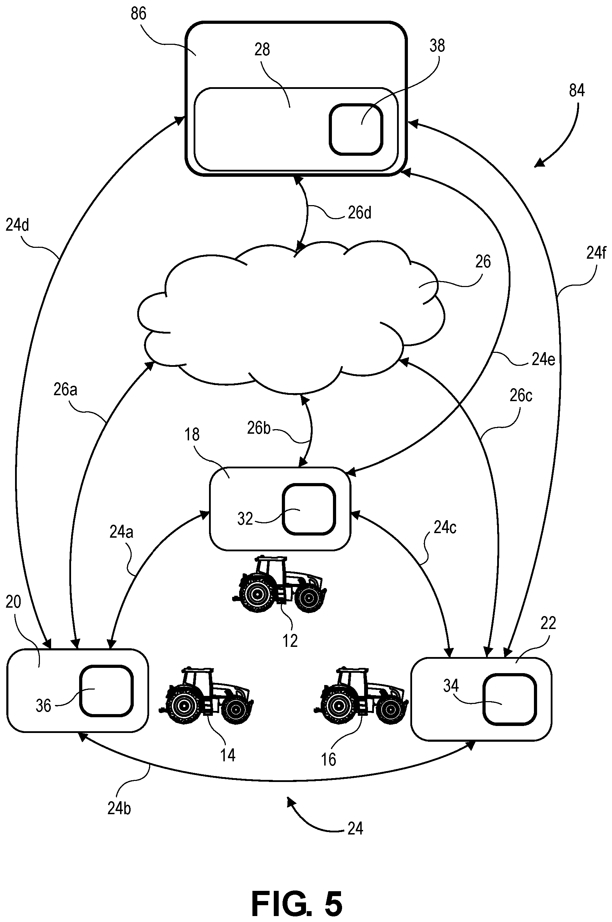

A system 84 according to another embodiment of the invention is illustrated in FIG. 5. The system 84 is similar to the system 10 illustrated in FIG. 1, but rather than being part of a cloud computing system the offboard computing system 28 is implemented by a personal computing device 86 such as a laptop computer, a tablet or a smartphone. The offboard computing system 28 functions in the same manner as explained above in relation to the system 10, except that the system 28 is accessible via both the machine-to-machine network 24 and the external network 26.

The machine-to-machine network 24 includes a link 24d between the machine 14 and the personal computing device 62, a link 24e between the machine 12 and the personal computing device 62, and a link 24f between the machine 16 and the personal computing device 62. Each machine 12, 14, 16 in the system 84 is configured to communicate directly with each other machine 12, 14 or 16 and with the personal computing device 86. The personal computing device 86 is also configured to communicate by way of the external network 26 through communication link 26d. By way of example, the personal computing device 86 may be a tablet computer or a smartphone placed in the operator's cabin of one of the machines 12, 14, 16 configured or enabled to communicate via both Wi-Fi and the cellular telecommunications network.

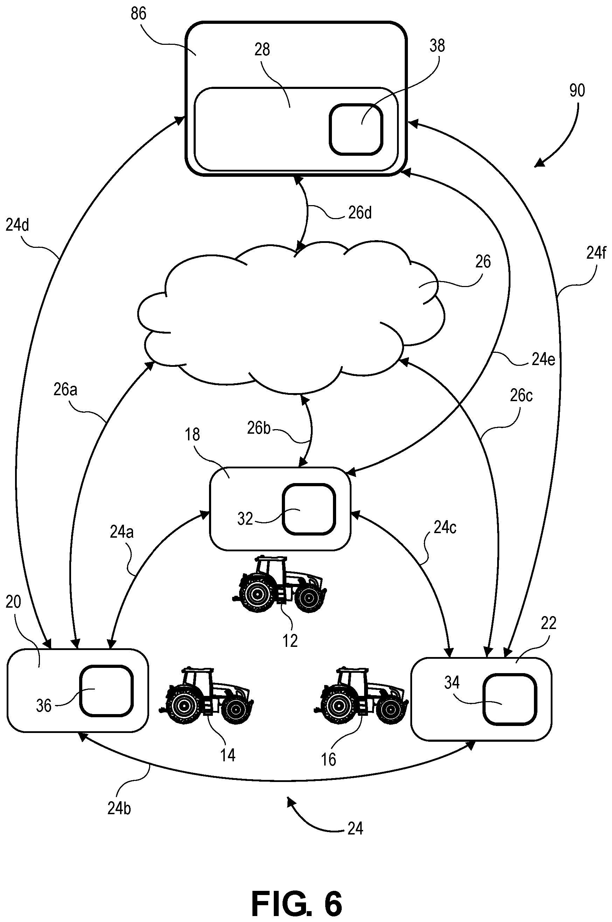

A system 90 according to another embodiment of the invention is illustrated in FIG. 6. The system 90 is similar to the system 84 illustrated in FIG. 5 except that the personal computing device 86 is not configured to communicate via the external network 26. By way of example, the personal computing device 86 may be a tablet computer or a smartphone placed in the operator's cabin of one of the machines 12, 14, 16 configured or enabled to communicate via Wi-Fi but not via the cellular telecommunications network.

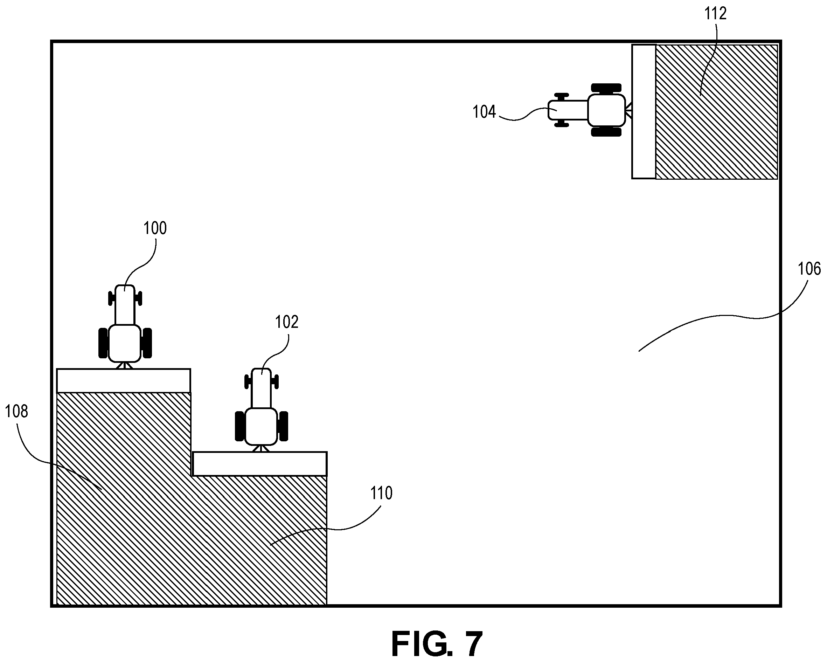

A first exemplary scenario is illustrated in FIG. 7, wherein three mobile agricultural machines 100, 102, 104 are performing a tillage operation in a field 106 using tillage implements. In this scenario the work group was created with two machines 100 and 102, wherein machine 100 began its operation first by creating an area or swath 108 of worked land behind the machine 100. As the machine 100 began performing its operation it began collecting working information include information about the geographic boundaries of the field 106 and the area 108 worked by the machine 100. The machine 100 shared that information with the offboard computing system (not shown in FIG. 7) and with the second mobile machine 102.

Using the working information received from the first machine 100, as well as working information collected by its own communications and control system, the second machine 102 created and maintained a data pool. As explained above the data pool on the first machine 100, the second machine 102 and the offboard computing system all include the working information from both mobile machines 100, 102. Using the working information from the first machine 100 the second machine 102 began its operation in coordination with the first machine 100 by traveling parallel with and alongside the worked area 108 to create another, complimentary worked area 110. Thus, by sharing working information the machines 100 and 102 are able to coordinate their work to ensure all areas of the field are covered with no or minimal overlap.

After the first and second machines 100, 102 begin working the field 106 the third machine 104 joins the work group. When machine 104 is admitted to the work group it immediately receives the most recent version of the data pool from the first machine 100, the second machine 102 and/or the offboard computing system. Data in the data pool indicates the areas 108, 110 worked by the first machine 100 and the second machine 102 as well as the current location, direction and speed of each of the machines 100, 102. Using that information and the field boundary information the third machine 104 begins working the field 106 as indicated by worked area 112. As the machines 100, 102, 104 continue to work the field 106 and share their working information in the form of data pools they coordinate their work.

In addition to sharing working information related to the areas worked 108, 110, 112 and the field 106 boundaries, each of the machines 100, 102, 104 may share working information related to machine settings and environmental information. If the machines 100, 102, 104 and/or the associated implements include soil moisture sensors, for example, that information is collected and included in the data pool such that each machine has access to the soil moisture information collected by the other machines and all the machines may use the information to plan or optimize operations. Other working information included in the data pool may include the fuel level of each machine 100, 102, 104, which may be useful when coordinating operation so that a machine with less fuel may be assigned less work.

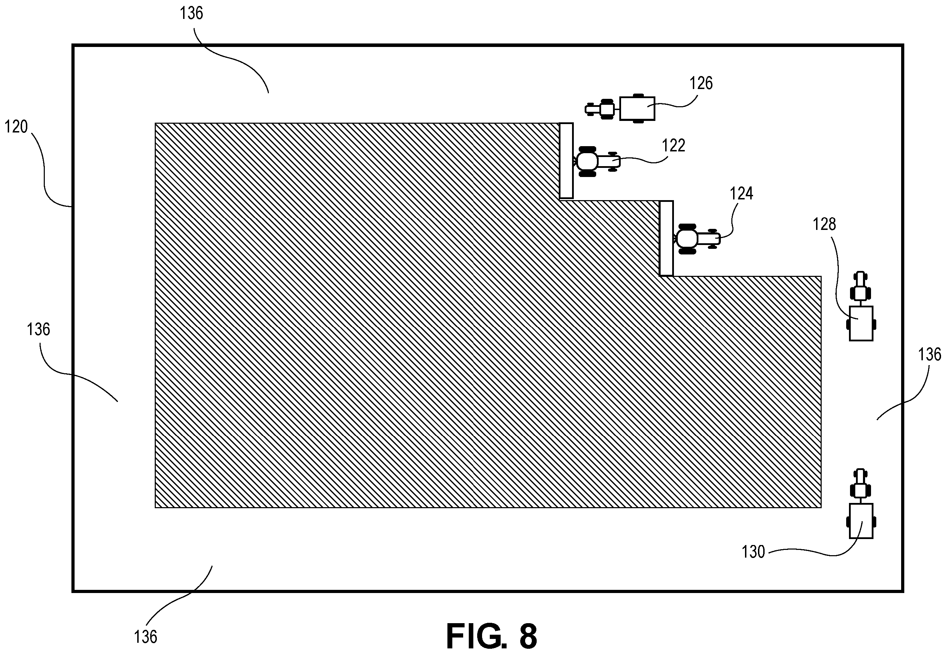

A second exemplary scenario is illustrated in FIG. 8, wherein two harvesters 122, 124 are harvesting a field 120 with the support of three grain carts 126, 128, 130. In this scenario the work group was created with all five of the machines 122, 124, 126, 128, 130. The harvesters 122, 124 began the operation by harvesting an outer edge of the field 120 to create a swath 136 of harvested area around the outer edge. As the harvesters 122, 124 harvested the outer edge of the field they collected working information including field boundaries, the size and shape of the area 136 harvested, machine settings that result in optimal harvesting, and the grain tank fill level of each of the harvesters 122, 124. Each harvester 122, 124 added that working information to its data pool and shared it with each of the other machines.

After the harvesters 122, 124 completing harvesting the outer edge of the field 120 they began harvesting the remaining crop as illustrated in the figure. As the harvesters 122, 124 perform the harvest the location and grain tank fill level of each harvester 122, 124 is included in the data pool as well as the location of each of the grain carts 126, 128, 130. Using the location and fill level information the machines 122, 124, 126, 128, 130 coordinate operation of the grain carts 126, 128, 130 such that each grain cart is in position to offload grain from a harvester when the harvester's grain tank is full or nearly full. The grain cart 126 is illustrated approaching the harvester 122 to receive harvested crop from the harvester 122.

The scenarios illustrated in FIGs. 7 and 8 are exemplary in nature and it will be understood that principles of the present invention may be implemented in other scenarios not illustrated or described herein. Another scenario includes a spraying operation involving multiple sprayers spraying a field and communicating in a manner similar to the machines in the tillage scenario described above wherein the sprayers share working information including information relating to the work completed by each of the sprayers. In scenarios involving spraying it can be difficult or impossible for an operator to see which portions of the field have been sprayed and which have not, making it difficult or even impossible for machine operators to accurately coordinate their work without missing portions of a field or spraying portions of a field twice. The present invention addresses this problem by enabling reliable and secure communications between machines wherein the machines share working information that is used to coordinate the performance of tasks.

According to yet another scenario a plurality of construction machines including bulldozers, graders and earthmovers are operating at a worksite and are in a work group sharing working information via the communications system described above. As a new machine enters the worksite or begins operations it requests to join the work group. Upon joining the work group the new machine receives an updated data pool including work performed by the other machines in the work group, the locations of each machine, and so forth. The new machine also begins sharing working information with the other machines in the work group. Using the data pool the machines in the work group coordinate operations to complete one or more tasks on the worksite.

Although the invention has been described with reference to the preferred embodiment illustrated in the attached drawing figures, it is noted that equivalents may be employed and substitutions made herein without departing from the scope of the invention as recited in the claims.

The claims at the end of this patent application are not intended to be construed under 35 U.S.C. § 112(f) unless traditional means-plus-function language is expressly recited, such as "means for" or "step for" language being explicitly recited in the claim(s).

Having thus described the preferred embodiment of the invention, what is claimed as new and desired to be protected by Letters Patent includes the following:

## Claims

1. A system comprising:
a plurality of mobile machines each including an onboard communications and
control system configured to -
communicate with each of the other machines of the plurality of mobile machines via at least two different electronic communication methods, a first of the at least two different electronic communication methods including communications through a machine-to-machine network, and a second of the at least two different electronic communication methods including communications through an external network,
collect working information specific to the machine and store the working information in a data pool on the machine,
communicate the working information specific to the machine to each of the other machines using any of the at least two different electronic communication methods, and
receive working information from the other machines using any of the at least two different electronic communications methods and store the received working information in the data pool; and
an offboard computing system configured to -
communicate with each of the mobile machines using at least one of the at least two different electronic communication methods,
receive the working information from each of the machines,
store the received working information in a data pool, and
communicate the data pool to each of the machines,
wherein each of the onboard communications and control systems on the mobile machines communicates the working information specific to the machine to the other mobile machines and to the offboard computing system when the working information specific to the respective machine is collected by the onboard computing system such that each data pool stored on the mobile machines and the data pool maintained by the offboard computing system always include the most recent working information from each of the mobile machines.

2. The system as set forth in claim 1, each of the on-board communications and control systems being configured to use the working information to coordinate operation of the mobile machine with the other of the plurality of mobile machines in performing a task.

3. The system as set forth in either of claims 1 or 2, the working information including a portion of a task completed by the machine.

4. The system as set forth in any preceding claim, the working information including machine setting information.

5. The system as set forth in any preceding claim, the working information including machine environment information.

6. The system as set forth in any preceding claim, the onboard communications and control system of each of the plurality of mobile machines being configured to determine if one of the at least two different electronic communication methods is unavailable and, if so, use another of the at least two different electronic communication methods to communicate with the other machines.

7. The system as set forth in any preceding claim, the onboard communications and control system of each of the plurality of mobile machines being configured to communicate the working information and to receive working information over two or more of the at least two different electronic communication methods simultaneously.

8. The system as set forth in any preceding claim, the on-board communications and control system of each of the plurality of mobile machines being configured to communicate a first portion of the working information over a first of the at least two different electronic communications methods and a second portion of the working information over a second of the at least two different electronic communications methods.

9. The system as set forth in any preceding claim,
the first of the at least two different electronic communication methods using a wireless network protocol based on the IEEE 802.11 family of local area network standards,
the external communications network including a cellular communications network and/or a satellite communications network.

10. The system as set forth in any preceding claim, the offboard computing system including a cloud computing system configured to communicate with each of the mobile machines using any of the at least two different electronic communication methods.

11. The system as set forth in any preceding claim, the offboard computing system including a personal computing device configured to communicate with each of the mobile machines using any of the at least two different electronic communication methods.

12. The system as set forth in any preceding claim, the offboard computing system including a personal computing device configured to communicate with each of the mobile machines using only one of the at least two different electronic communication methods.

13. The system as set forth in any preceding claim, each of the at least two different electronic communication methods using the same communications protocol.

14. A method comprising:
using an onboard communications and control system of each of a plurality of mobile
machines to -
communicate with each of the other machines of the plurality of mobile machines via at least two different electronic communication methods, a first of the at least two different electronic communication methods including communications through a machine-to-machine network, and a second of the at least two different electronic communication methods including communications through an external network,
collect working information specific to the machine and store the working information in a data pool on the machine,
communicate the working information specific to the machine to each of the other machines using any of the at least two different electronic communication methods, and
receive working information from the other machines using any of the at least two different electronic communications methods and store the received working information in the data pool; and
using an offboard computing system to -
communicate with each of the mobile machines using at least one of the at least two different electronic communication methods,
receive the working information from each of the machines,
store the received working information in a data pool, and
communicate the data pool to each of the machines,
wherein each of the onboard communications and control systems on the mobile machines communicates the working information specific to the machine to the other mobile machines and to the offboard computing system when the working information specific to the respective machine is collected by the onboard computing system such that each data pool stored on the mobile machines and the data pool maintained by the offboard computing system always include the most recent working information from each of the mobile machines.

15. The method as set forth in claim 14, further comprising using each of the on-board communications and control systems to use the working information to coordinate operation of the mobile machine with the other of the plurality of mobile machines in performing a task.

16. The method as set forth in either claim 14 or claim 15, the working information including a portion of a task completed by the machine, machine setting information or machine environment information.

17. The method as set forth in any of claims 14 through 16, further comprising using the onboard communications and control system of each of the plurality of mobile machines to determine if one of the at least two different electronic communication methods is unavailable and, if so, use another of the at least two different electronic communication methods to communicate with the other machines.

18. The method as set forth in any of claims 14 through 17, further comprising using the onboard communications and control system of each of the plurality of mobile machines to communicate the working information and to receive working information over two or more of the at least two different electronic communication methods simultaneously.

19. The method as set forth in any of claims 14 through 18, further comprising using the on-board communications and control system of each of the plurality of mobile machines to communicate a first portion of the working information over a first of the at least two different electronic communications methods and a second portion of the working information over a second of the at least two different electronic communications methods.

20. The method as set forth in any of claims 14 through 19,
the first of the at least two different electronic communication methods using a wireless network protocol based on the IEEE 802.11 family of local area network standards,
the external communications network including a cellular communications network and/or a satellite communications network.
